# EUROPEAN PATENT APPLICATION

(11) **EP 4 130 142 A1**
(43) Date of publication of application: **08.02.2023**
(21) Application number: 21782247.7
(22) Date of filing: 31.03.2021
(51) Int. Cl.: C08L 23/12, C08K 7/02, C08K 7/20, C08L 23/26

(54) **FIBER-REINFORCED POLYPROPYLENE RESIN COMPOSITION AND METHOD FOR PRODUCING SAME**

(30) Priority: 31.03.2020 JP 2020062388
(71) Applicant: Prime Polymer Co., Ltd., Tokyo 105-7122 (JP)
(72) Inventor: MATSUDA, Yuichi, Sodegaura-shi, Chiba 299-0265 (JP)
(74) Representative: J A Kemp LLP
(86) International application number: PCT/JP2021/013790
(87) International publication number: WO 2021/201086

(57) **Abstract**

A fiber-reinforced polypropylene-based resin composition is disclosed that includes a polypropylene-based resin (A); an unsaturated carboxylic acid-modified polypropylene-based resin (B) in which the amount of a polypropylene-derived C24 or lower oligomer component that volatilizes when heated at 150°C for 30 minutes is less than 200 µg/g; and reinforcing fibers (C). Also disclosed is a method for producing the fiber-reinforced polypropylene-based resin composition described above. The method includes a step of obtaining the unsaturated carboxylic acid-modified polypropylene-based resin (B) by kneading a polypropylene, and an unsaturated carboxylic acid or a derivative thereof together with an organic peroxide at 170 to 200°C.

## Description

### TECHNICAL FIELD

The present invention relates to a fiber-reinforced polypropylene-based resin composition capable of forming a molded body having excellent strength (in particular, creep resistance), and to a method for producing the same.

### BACKGROUND ART

Fiber-reinforced resin molded bodies are lightweight and have excellent rigidity and heat resistance, and are therefore used in various fields such as electrical appliances, automobiles, housing equipment and medical instruments.

For example, fiber-reinforced resin molded bodies that are known are those using reinforcing fibers such as glass fibers, and polyolefin-based resins such as polypropylene. Polyolefin-based resins are generally inexpensive, have excellent processability and chemical resistance, are unlikely to generate harmful gases when incinerated, and have high recyclability. Because of these and other advantageous characteristics, polyolefin-based resins attract attention as matrix resins for fiber-reinforced resins. Particular attention is drawn to polypropylene-based resins that are inexpensive, low in specific gravity and relatively high in heat resistance, and have excellent characteristics such as molding properties and chemical resistance.

Because of low polarity, polypropylene-based resins tend to be poor in interfacial adhesion with reinforcing fibers. A known approach to improving the interfacial adhesion with reinforcing fibers is to use an unsaturated carboxylic acid-modified polypropylene-based resin.

An unsaturated carboxylic acid-modified polypropylene-based resin is usually obtained by introducing unsaturated carboxylic acid units into an unmodified polypropylene-based resin using an unsaturated carboxylic acid component. Unfortunately, an acid-modified polypropylene-based resin thus obtained tends to contain a certain amount of an unreacted unsaturated carboxylic component that, if remaining in a large amount in the resin, may adversely affect physical properties of fiber-reinforced resin molded bodies.

For example, Patent Literature 1 suggests that the deterioration in properties is suppressed by using a fiber-sizing agent that includes an acid-modified polypropylene-based resin and is such that the amount of an unsaturated carboxylic acid monomer in a dry residue of the fiber-sizing agent is 10,000 ppm or less.

### CITATION LIST

### PATENT LITERATURE

Patent Literature 1: JP-A-2016-006245

### SUMMARY OF INVENTION

### TECHNICAL PROBLEM

The present inventor intends to further improve the strength such as, in particular, creep resistance of a conventional fiber-reinforced polypropylene-based resin composition containing an unsaturated carboxylic acid-modified polypropylene-based resin. Objects of the present invention are therefore to provide a fiber-reinforced polypropylene-based resin composition capable of forming a molded body having excellent strength (in particular, creep resistance), and to provide a method for producing the same.

### SOLUTION TO PROBLEM

The present inventor carried out extensive studies to achieve the above objects. As a result, the present inventor has found that strength (in particular, creep resistance) is enhanced highly effectively by using an unsaturated carboxylic acid-modified polypropylene-based resin in which the content of a specific kind of an oligomer that volatilizes under specific conditions is limited to a specific amount or less. The present invention has been completed based on the finding. Specifically, a summary of the present invention is as follows.
[1] A fiber-reinforced polypropylene-based resin composition comprising a polypropylene-based resin (A); an unsaturated carboxylic acid-modified polypropylene-based resin (B) in which the amount of a polypropylene-derived C24 or lower oligomer component that volatilizes when heated at 150°C for 30 minutes is less than 200 µg/g; and reinforcing fibers (C).
[2] The fiber-reinforced polypropylene-based resin composition described in [1], wherein the amount of an unsaturated carboxylic acid-derived volatile component that volatilizes when the unsaturated carboxylic acid-modified polypropylene-based resin (B) is heated at 150°C for 30 minutes is 10 to 1000 µg/g.
[3] The fiber-reinforced polypropylene-based resin composition described in [1], wherein the unsaturated carboxylic acid-modified polypropylene-based resin (B) comprises a maleic anhydride-modified polypropylene-based resin.
[4] The fiber-reinforced polypropylene-based resin composition described in [1], wherein the reinforcing fibers (C) comprise glass fibers.
[5] A method for producing the fiber-reinforced polypropylene-based resin composition described in [1], the method comprising a step of obtaining the unsaturated carboxylic acid-modified polypropylene-based resin (B) by kneading a polypropylene, and an unsaturated carboxylic acid or a derivative thereof together with an organic peroxide at 170 to 200°C.
[6] The method described in [5] for producing the fiber-reinforced polypropylene-based resin composition, wherein the kneading in the step is performed using a twin-screw extruder, and the preset temperature of a kneading section of the twin-screw extruder is 110°C or above and less than the melting point of the polypropylene.

### ADVANTAGEOUS EFFECTS OF INVENTION

The fiber-reinforced polypropylene-based resin composition provided according to the present invention is capable of forming a molded body having excellent strength (in particular, creep resistance). The method of the present invention can produce such a composition.

It is known that certain physical properties tend to be deteriorated when, for example, a maleic anhydride-modified polypropylene containing a large amount of unreacted maleic anhydride is used in a glass fiber-reinforced polypropylene-based resin composition. The present invention stands on a different point of view from maleic anhydride. Specifically, the present invention provides a fiber-reinforced polypropylene-based resin composition capable of forming a molded body having excellent strength (in particular, creep resistance) by the use of an unsaturated carboxylic acid-modified polypropylene-based resin (B) in which the amount of a polypropylene-derived C24 or lower oligomer component that volatilizes under specific conditions is limited to a specific range.

### DESCRIPTION OF EMBODIMENTS

### <Polypropylene-based resins (A)>

A polypropylene-based resin (A) used in the present invention is typically a propylene homopolymer. However, the polypropylene-based resin (A) in the present invention is not limited thereto and may be a propylene-based copolymer (a copolymer of propylene and another monomer). Examples of the propylene-based copolymers include random copolymers and block copolymers of propylene and at least one α-olefin selected from ethylene and α-olefins having 4 to 20 carbon atoms. The content of propylene-derived frameworks in the random copolymer is usually 90 to 99 mol%, and preferably 92 to 98 mol%. The content of propylene-derived frameworks in the block copolymer is usually 70 to 99 mol%, and preferably 75 to 98 mol%. The polypropylene-based resin (A) may be a combination of two or more kinds of propylene-based resins (for example, a propylene homopolymer and a propylene-based copolymer).

When the polypropylene-based resin (A) comprises a propylene-based copolymer, specific examples of the monomers other than propylene that may be used in the propylene-based copolymer include ethylene, 1-butene, 2-methyl-1-propene, 2-methyl-1-butene, 3-methyl-1-butene, 1-pentene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene and 1-dodecene.

The melt flow rate (MFR) of the polypropylene-based resin (A) measured at 230°C under 2.16 kg load in accordance with ASTM D1238 is preferably 0.1 to 500 g/10 min, more preferably 0.2 to 400 g/10 min, and particularly preferably 0.3 to 300 g/10 min.

The polypropylene-based resin (A) is preferably an isotactic polypropylene-based resin. The isotactic propylene-based resin is a propylene-based resin having an isotactic pentad fraction of 0.9 or more, preferably 0.95 or more, as determined by an NMR method. However, the polypropylene-based resin (A) in the present invention is not limited thereto and may be a syndiotactic polypropylene-based resin or an atactic polypropylene-based resin. Further, the polypropylene-based resin (A) may be one prepared using a Ziegler-Natta catalyst or may be one prepared using a metallocene catalyst.

### <Unsaturated carboxylic acid-modified polypropylene-based resins (B)>

An unsaturated carboxylic acid-modified polypropylene-based resin (B) used in the present invention is obtained by acid-modifying a polypropylene-based resin with an unsaturated carboxylic acid or a derivative thereof. The modification method may be, for example, graft modification or copolymerization.

Specific examples of the unsaturated carboxylic acids used for modification include acrylic acid, methacrylic acid, maleic acid, nadic acid, fumaric acid, itaconic acid, crotonic acid, citraconic acid, sorbic acid, mesaconic acid, angelic acid and phthalic acid. Examples of the derivatives of unsaturated carboxylic acids include acid anhydrides, esters, amides, imides and metal salts, with specific examples including maleic anhydride, itaconic anhydride, citraconic anhydride, nadic anhydride, phthalic anhydride, methyl acrylate, methyl methacrylate, ethyl acrylate, butyl acrylate, monoethyl maleate ester, acrylamide, maleic acid monoamide, maleimide, N-butylmaleimide, sodium acrylate and sodium methacrylate. In particular, unsaturated dicarboxylic acids and derivatives thereof are preferable. Maleic anhydride and phthalic anhydride are more preferable, and maleic anhydride is most preferable.

When the acid modification is performed by a melt-kneading process, for example, the polypropylene and the unsaturated carboxylic acid or derivative thereof are kneaded together with an organic peroxide in an extruder to graft copolymerize the unsaturated carboxylic acid or the derivative thereof and thereby modify the polymer. Specific examples of the organic peroxides include benzoyl peroxide, lauroyl peroxide, azobisisobutyronitrile, dicumyl peroxide, t-butylhydroperoxide, α,α'-bis(t-butylperoxydiisopropyl)benzene, bis(t-butyldioxyisopropyl)benzene, 2,5-dimethyl-2,5-di(t-butylperoxy)hexane, 2,5-dimethyl-2,5-di(t-butylperoxy)hexyne-3, di-t-butyl peroxide and cumenehydroperoxide.

In particular, the unsaturated carboxylic acid-modified polypropylene-based resin (B) preferably comprises a fatty acid anhydride-modified polypropylene-based resin, and more preferably comprises a maleic anhydride-modified polypropylene-based resin.

In the present invention, the amount of a polypropylene-derived C24 or lower oligomer component (volatile component) that volatilizes when the unsaturated carboxylic acid-modified polypropylene-based resin (B) is heated at 150°C for 30 minutes is less than 200 µg/g, preferably less than 150 µg/g, and more preferably less than 50 µg/g. When the amount of such an oligomer component that volatilizes under the above specific conditions is within any of the ranges described above, the strength (in particular, creep resistance) of a molded body is enhanced. The lower limit of each of the ranges is not limited to any particular value. A smaller amount of the volatile component is more preferable. In consideration of the time and cost required for the step of removing the oligomer component (such as the step in the method described later in the section of production method, or the drying step in EXAMPLES), the lower limit of each of the above ranges is preferably 20 µg/g or more. Here, the amount of the volatile component is a value measured by GC-MS (gas chromatography-mass spectrometry). Details of the measurement method will be described in the section of EXAMPLES.

In the present invention, the amount of an unsaturated carboxylic acid-derived volatile component that volatilizes when the unsaturated carboxylic acid-modified polypropylene-based resin (B) is heated at 150°C for 30 minutes is preferably 10 to 1000 µg/g, and more preferably 10 to 500 µg/g. When the amount of an unsaturated carboxylic acid-derived volatile component that volatilizes under the above specific conditions is within any of the ranges described above, the strength (in particular, creep resistance) of a molded body is further enhanced by the action and effect of the amount of this volatile component being small along with the action and effect of the amount of the above-described oligomer component being small. Here, the amount of an unsaturated carboxylic acid-derived volatile component is a value measured by GC-MS (gas chromatography-mass spectrometry). Details of the measurement method will be described in the section of EXAMPLES.

In the present invention, when graft modification is used as the modification method for obtaining the unsaturated carboxylic acid-modified polypropylene-based resin (B), the amount of grafting of the unsaturated carboxylic acid or the derivative thereof is preferably 0.3 to 5 mass%, and more preferably 0.5 to 3 mass%. Details of the method for measuring the amount of grafting will be described in the section of EXAMPLES.

The type and properties of the polypropylene-based resin that is the base of the unsaturated carboxylic acid-modified polypropylene-based resin (B) are not particularly limited. However, the type and properties may be similar to those of the polypropylene-based resin (A) described hereinabove.

### <Reinforcing fibers (C)>

Reinforcing fibers (C) used in the present invention are not limited to any particular type. Specific examples of the reinforcing fibers (C) include glass fibers, carbon fibers (fibers of carbon), carbon nanotubes, basic magnesium sulfate fibers (magnesium oxysulfate fibers), potassium titanate fibers, aluminum borate fibers, calcium silicate fibers, calcium carbonate fibers, silicon carbide fibers, wollastonite, xonotlite, metal fibers, natural fibers such as cotton, celluloses, silk, wool and hemp, regenerated fibers such as rayon and cupra, semisynthetic fibers such as acetate and Promix, synthetic fibers such as polyesters, polyacrylonitriles, polyamides, aramids and polyolefins, and modified fibers obtained by chemically modifying the surface and terminals of the above fibers. In particular, the reinforcing fibers (C) preferably comprise glass fibers.

The reinforcing fibers (C) are preferably in the form of chopped strands. The chopped strands usually have a length of 1 to 10 mm and a fiber diameter of 5 to 20 µm, and preferably have a length of 1.5 to 6 mm and a fiber diameter of 8 to 14 um. The fiber shape may be continuous fiber bundles. The continuous fiber bundles are commercially available as, for example, rovings. The fiber diameter thereof is usually 5 to 30 um, and preferably 13 to 20 µm.

The reinforcing fibers (C) may be a single kind of reinforcing fibers or may be a combination of two or more kinds of reinforcing fibers.

### <Other components>

Where necessary, additives such as elastomer components serving as impact improvers, heat stabilizers, antistatic agents, weather stabilizers, light stabilizers, antiaging agents, oxidation inhibitors, copper inhibitors, fatty acid metal salts, softeners, dispersants, fillers, colorants, pigments and foaming agents may be added to a fiber-reinforced polypropylene-based resin composition of the present invention while still achieving the objects of the present invention. The additives may be mixed in any order, and may be mixed at the same time or in a multistage manner in which some components are mixed first and the rest of the components is mixed thereafter. In particular, it is preferable to add a phenol-based oxidation inhibitor and/or a sulfur-based oxidation inhibitor.

### <Fiber-reinforced polypropylene-based resin compositions>

A fiber-reinforced polypropylene-based resin composition of the present invention is a resin composition containing the polypropylene-based resin (A), the unsaturated carboxylic acid-modified polypropylene-based resin (B) and the reinforcing fibers (C) described hereinabove.

In the fiber-reinforced polypropylene-based resin composition, the content of the polypropylene-based resin (A) is preferably 90 to 50 parts by mass, and more preferably 80 to 60 parts by mass based on 100 parts by mass of the total of the polypropylene-based resin (A) and the reinforcing fibers (C). The content of the reinforcing fibers (C) is preferably 10 to 50 parts by mass, and more preferably 20 to 40 parts by mass.

The content of the unsaturated carboxylic acid-modified polypropylene-based resin (B) is preferably 0.5 to 5 parts by mass, and more preferably 1 to 3 parts by mass based on 100 parts by mass of the total of the polypropylene-based resin (A) and the reinforcing fibers (C) .

### <Methods for producing fiber-reinforced polypropylene-based resin compositions>

The fiber-reinforced polypropylene-based resin composition of the present invention may be produced by blending the polypropylene-based resin (A), the unsaturated carboxylic acid-modified polypropylene-based resin (B) and the reinforcing fibers (C) described hereinabove, and optionally other components as desired. The components may be blended in any order. For example, the fiber-reinforced polypropylene-based resin composition may be obtained as pellets by mixing or melt-kneading the components using a mixing device.

The fiber-reinforced polypropylene-based resin composition of the present invention is preferably produced by a method that includes a step of obtaining the unsaturated carboxylic acid-modified polypropylene-based resin (B) by kneading a polypropylene, and an unsaturated carboxylic acid or a derivative thereof together with an organic peroxide at 170 to 200°C. This step is highly effective for removing a specific volatile component (a polypropylene-derived C24 or lower oligomer component) from the unsaturated carboxylic acid-modified polypropylene-based resin (B).

The resin temperature during kneading in the above step is 170 to 200°C, and preferably 170 to 190°C.

When kneading in the above step is performed using an extruder such as a twin-screw extruder, the preset temperature of a kneading section of the extruder such as a twin-screw extruder is preferably 110°C or above and less than the melting point of the polypropylene, and is more preferably 120°C or above and 150°C or less. The kneading section of a twin-screw extruder is a section which is provided with a kneading (a screw segment) and in which a resin is plasticized and thermally kneaded by a shearing action created by rotating of the screw. The preset temperature of a die section at the tip of a twin-screw extruder is preferably 170°C or above and less than 200°C, and is preferably 170°C or above and 190°C or below. The die section is not affected by the temperature increase due to the generation of heat stemming from the shearing action of the rotating screw, and therefore the die section is preferably preset at a higher temperature than the kneading section in order to keep the resin temperature from the kneading section.

### EXAMPLES

Hereinbelow, the present invention will be described in greater detail based on Examples and Comparative Examples. However, the scope of the present invention is not limited to such Examples.

### <Production Example 1>

100 Parts by mass of polypropylene [manufactured by PRIME POLYMER CO., LTD., trade name: E-100GV, homopolymer, melting point: 165°C], 2 parts by mass of maleic anhydride, and 0.3 part by mass of an organic peroxide [manufactured by Kayaku Akzo Co., Ltd., trade name: Perkadox (registered trademark) 14] were mixed together uniformly with a Henschel mixer. The mixture thus obtained was supplied to a corotating twin-screw extrusion kneader [manufactured by The Japan Steel Works, LTD., TEX (registered trademark) 44] and was kneaded at a kneading section temperature of 130°C, a die section temperature of 180°C and a resin temperature of 190°C. Pellets of maleic anhydride-modified polypropylene (B-1) were thus obtained.

### <Production Example 2>

The maleic anhydride-modified polypropylene (B-1) obtained in Production Example 1 was dried at 120°C for 2 hours using a gear oven. Pellets of maleic anhydride-modified polypropylene (B-2) were thus obtained.

### <Production Example 3>

Maleic anhydride-modified polypropylene (B'-1) [manufactured by Polyram Plastic Industries LTD., trade name: Bondyram 1001] was dried at 120°C for 2 hours using a gear oven. Pellets of maleic anhydride-modified polypropylene (B-3) were thus obtained.

The maleic anhydride-modified polypropylenes (B-1) to (B-3) obtained as described above, the maleic anhydride-modified polypropylene (B'-1) [manufactured by Polyram Plastic Industries LTD., trade name: Bondyram 1001], and maleic anhydride-modified polypropylene (B'-2) [manufactured by Polymer Asia, trade name: PA-Bond 363C] were analyzed by the methods described below to determine the amount of grafting of maleic anhydride, the amount of maleic anhydride-derived volatile components, and the amount of C24 or lower volatile oligomer components. The results are described in Table 1.

### [Amount of grafting of maleic anhydride]

About 2 g of the maleic anhydride-modified polypropylene-based resin was sampled and was completely dissolved by heating into 500 ml of boiling p-xylene. The solution was cooled and was added into 1200 ml of acetone. The resultant precipitate was filtered off and was dried to give a purified polymer. The purified polymer was hotpressed into a 20 um thick film. An infrared absorption spectrum of the film was measured, and the amount of grafting of maleic anhydride was determined based on the absorption near 1780 cm⁻¹.

### [Amount of maleic anhydride-derived volatile components]

50 mg of the maleic anhydride-modified polypropylene-based resin was sampled and was heated at 150°C for 30 minutes. The amount of maleic anhydride-derived volatile components was determined by GC-MS (gas chromatography-mass spectrometry).

### [Amount of C24 or lower oligomer components]

50 mg of the maleic anhydride-modified polypropylene-based resin was sampled and was heated at 150°C for 30 minutes. The amount of C24 or lower oligomer components (volatile components) was determined by GC-MS.

### [Table 1]

**Table 1**

| | B-1 | B-2 | B-3 | B'-1 | B'-2 |
|---|---|---|---|---|---|
| Amount (mass%) of grafting of maleic anhydride | 0.5 | 0.5 | 0.6 | 0.6 | 0.7 |
| Amount (µg/g) of maleic anhydride-derived volatile components | 530 | 122 | 43 | 79 | 67 |
| Amount (µg/g) of C24 or lower oligomer components | 29 | 5 | 109 | 225 | 429 |

### <Example 1>

### 80 Parts by mass of polypropylene (J105G)

[manufactured by PRIME POLYMER CO., LTD., trade name: J105G, homopolymer, MFR = 9 g/10 min] as a polypropylene-based resin (A), 1 part by mass of the maleic anhydride-modified polypropylene (B-1) obtained in Production Example 1 as an unsaturated carboxylic acid-modified polypropylene-based resin (B), 0.1 part by mass of a phenol-based oxidation inhibitor (Irg 1010) [manufactured by BASF, trade name: IRGANOX (registered trademark) 1010], and 0.1 part by mass of a sulfur-based oxidation inhibitor (DMTP) [manufactured by Mitsubishi Chemical Corporation, trade name: DMTP] were uniformly mixed together in a tumbler mixer.

The mixture obtained as described above was supplied to a corotating twin-screw extrusion kneader [manufactured by The Japan Steel Works, LTD., TEX (registered trademark) 30α]. Glass fibers (T-480) [manufactured by Nippon Electric Glass Co., Ltd., trade name: T-480, chopped strands] as reinforcing fibers (C) were side fed at some midpoint of the corotating twin-screw extrusion kneader. The materials were thermally kneaded at 240°C to form pellets of a fiber-reinforced polypropylene-based resin composition.

### <Example 2>

Pellets of a fiber-reinforced polypropylene-based resin composition were obtained in the same manner as in Example 1, except that the unsaturated carboxylic acid-modified polypropylene-based resin (B) was changed from the maleic anhydride-modified polypropylene (B-1) obtained in Production Example 1 to the maleic anhydride-modified polypropylene (B-2) obtained in Production Example 2.

### <Example 3>

Pellets of a fiber-reinforced polypropylene-based resin composition were obtained in the same manner as in Example 1, except that the unsaturated carboxylic acid-modified polypropylene-based resin (B) was changed from the maleic anhydride-modified polypropylene (B-1) obtained in Production Example 1 to the maleic anhydride-modified polypropylene (B-3) obtained in Production Example 3.

### <Comparative Example 1>

Pellets of a fiber-reinforced polypropylene-based resin composition were obtained in the same manner as in Example 1, except that the maleic anhydride-modified polypropylene (B-1) obtained in Production Example 1 was replaced by the maleic anhydride-modified polypropylene (B'-1) [manufactured by Polyram Plastic Industries LTD., trade name: Bondyram 1001].

### <Comparative Example 2>

Pellets of a fiber-reinforced polypropylene-based resin composition were obtained in the same manner as in Example 1, except that the maleic anhydride-modified polypropylene (B-1) obtained in Production Example 1 was replaced by the maleic anhydride-modified polypropylene (B'-2) [manufactured by Polymer Asia, trade name: PA-Bond 363C].

The pellets of Examples and Comparative Examples were each molded into an ISO 527 1A dumbbell test piece with an injection molding machine at a molding temperature of 220°C and a mold temperature of 40°C. The test pieces were tested by the methods described below to measure the tensile fracture stress and the creep rupture time. The results are described in Table 2.

### [Tensile fracture stress]

The tensile fracture stress (MPa) of the 1A dumbbell was measured at a stress rate of 5 mm/min in accordance with ISO 527.

### [Creep rupture time]

The ISO 527 1A dumbbell was tested under conditions of 80°C and 25 MPa stress to measure the creep rupture time (hr).

### [Table 2]

**Table 2**

| | | | Ex. 1 | Ex. 2 | Ex. 3 | Comp. Ex. 1 | Comp. Ex. 2 |
|---|---|---|---|---|---|---|---|
| Polypropylene-based resin (A) | J105G | Parts by mass | 80 | 80 | 80 | 80 | 80 |
| Unsaturated carboxylic acid-modified polypropylene-based resins (B) | B-1 | Parts by mass | 1 | | | | |
| | B-2 | Parts by mass | | 1 | | | |
| | B-3 | Parts by mass | | | 1 | | |
| | B'-1 | Parts by mass | | | | 1 | |
| | B'-2 | Parts by mass | | | | | 1 |
| Reinforcing fibers (C) | T-480 | Parts by mass | 20 | 20 | 20 | 20 | 20 |
| Other components | Irg 1010 | Parts by mass | 0.1 | 0.1 | 0.1 | 0.1 | 0.1 |
| | DMTP | Parts by mass | 0.1 | 0.1 | 0.1 | 0.1 | 0.1 |
| Tensile fracture stress | | MPa | 83 | 83 | 81 | 80 | 80 |
| Creep rupture time | | hr | 151 | 172 | 132 | 95 | 104 |

As clear from Table 2, the molded bodies of the glass fiber-reinforced polypropylene-based resin compositions of Examples 1 to 3 had a long creep rupture time and attained excellent creep resistance.

In contrast, Comparative Examples 1 and 2 in which the amount of C24 or lower oligomer components was more than 200 µg/g resulted in a short creep rupture time, namely, poor creep resistance.

### INDUSTRIAL APPLICABILITY

The fiber-reinforced polypropylene-based resin composition of the present invention may be suitably used as a material for highly creep resistant molded bodies in various fields.

## Claims

1. A fiber-reinforced polypropylene-based resin composition comprising a polypropylene-based resin (A); an unsaturated carboxylic acid-modified polypropylene-based resin (B) in which the amount of a polypropylene-derived C24 or lower oligomer component that volatilizes when heated at 150°C for 30 minutes is less than 200 µg/g; and reinforcing fibers (C).

2. The fiber-reinforced polypropylene-based resin composition according to claim 1, wherein the amount of an unsaturated carboxylic acid-derived volatile component that volatilizes when the unsaturated carboxylic acid-modified polypropylene-based resin (B) is heated at 150°C for 30 minutes is 10 to 1000 µg/g.

3. The fiber-reinforced polypropylene-based resin composition according to claim 1, wherein the unsaturated carboxylic acid-modified polypropylene-based resin (B) comprises a maleic anhydride-modified polypropylene-based resin.

4. The fiber-reinforced polypropylene-based resin composition according to claim 1, wherein the reinforcing fibers (C) comprise glass fibers.

5. A method for producing the fiber-reinforced polypropylene-based resin composition according to claim 1, the method comprising a step of obtaining the unsaturated carboxylic acid-modified polypropylene-based resin (B) by kneading a polypropylene, and an unsaturated carboxylic acid or a derivative thereof together with an organic peroxide at 170 to 200°C.

6. The method according to claim 5 for producing the fiber-reinforced polypropylene-based resin composition, wherein the kneading in the step is performed using a twin-screw extruder, and the preset temperature of a kneading section of the twin-screw extruder is 110°C or above and less than the melting point of the polypropylene.
